# EUROPEAN PATENT APPLICATION

(11) **EP 4 693 067 A1**
(43) Date of publication of application: **11.02.2026**
(21) Application number: 24855114.5
(22) Date of filing: 26.06.2024
(51) Int. Cl.: G06F 16/3329

(54) **CONTENT MANAGEMENT METHOD AND APPARATUS, DEVICE, AND STORAGE MEDIUM**

(71) Applicant: Beijing Zitiao Network Technology Co., Ltd., Beijing 100190 (CN)
(72) Inventor: QI, Junyuan, Beijing 100028 (CN)
(74) Representative: Grünecker Patent- und Rechtsanwälte PartG mbB
(86) International application number: PCT/CN2024/101741
(87) International publication number: WO 2026/000261

(57) **Abstract**

According to embodiments of the present disclosure, a method, an apparatus, a device, and a storage medium for content management are provided. The method includes: obtaining an attribute feature of a user related to content understanding; in response to determining a first content to be presented, processing the first content based on the attribute feature to obtain a second content; and presenting the second content. In this way, the content desired by the user can be presented according to the attribute feature, so that the user can obtain information in a more efficient manner.

## Description

### FIELD

Exemplary implementations of the present disclosure generally relate to the field of computer, and in particular, to method, apparatus, device, and computer-readable storage medium for content management.

### BACKGROUND

With the rapid development of the Internet, more and more applications are designed to provide various services to users. For example, an application may provide a query service to a user. The application may obtain a processing request from a user (for example, a query text input by the user, that is, a "question"), and provide a processing result corresponding to the question based on the processing request. However, a processing result provided by an existing application may not meet a user's requirement, therefore, it is desired that the application better understand the user's requirement and can obtain and present a processing result according to the user's requirement.

### SUMMARY

**In** a first aspect of the present disclosure, a method for content management is provided. The method comprises the following steps: obtaining attribute features of a user related to content understanding; in response to determining a first content to be presented, processing the first content based on the attribute features to obtain a second content; and presenting the second content.

**In** a second aspect of the present disclosure, an apparatus for content management is provided, including: an obtaining module configured to obtain attribute features of a user related to content understanding; a processing module configured to, in response to determining a first content to be presented, process the first content based on the attribute features to obtain a second content; and a presenting module configured to present the second content.

In a third aspect of the present disclosure, an electronic device is provided. The electronic device includes: at least one processing unit; and at least one memory coupled to the at least one processing unit and storing instructions for execution by the at least one processing unit, the instructions, when executed by the at least one processing unit, causing the electronic device to perform the method according to the first aspect of the present disclosure.

**In** a fourth aspect of the present disclosure, there is provided a computer-readable storage medium storing a computer program thereon, the computer program, when executed by a processor, causing the processor to implement the method according to the first aspect of the present disclosure.

According to a fifth aspect of the present disclosure, there is provided a computer program product, comprising a computer program, wherein the computer program, when executed by a processor, implements the method according to the first aspect of the present disclosure.

**It** should be understood that the content described in this section is not intended to limit essential features or important features of implementations of the present disclosure, nor is it intended to limit the scope of the present disclosure. Other features of the present disclosure will become easy to understand from the following description.

### BRIEF DESCRIPTION OF DRAWINGS

The above and other features, advantages, and aspects of various implementations of the present disclosure will become more apparent from the following detailed description with reference to accompanying drawings. In the drawings, the same or similar reference numericals refer to the same or similar elements, wherein:
FIG. 1 illustrates a schematic diagram of an example environment in which embodiments of the present disclosure can be implemented;
FIGS. 2A to 2I illustrate schematic diagrams of example interfaces for content management according to some embodiments of the present disclosure;
FIG. 3 illustrates a flowchart of a process for content management according to some embodiments of the present disclosure;
FIG. 4 illustrates a schematic structural block diagram of an apparatus for content management according to some embodiments of the present disclosure; and
FIG. 5 illustrates a block diagram of an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for exemplary purposes only and are not intended to limit the scope of protection of the present disclosure.

**In** the description of embodiments of the present disclosure, the term "including" and the like should be interpreted as an open-ended include, i.e., "including but not limited to". The term "based on" should be interpreted as "based at least in part on". The term "one embodiment" or "the embodiment" should be interpreted as "at least one embodiment". The term "some embodiments" should be interpreted as "at least some embodiments". Other explicit and implicit definitions may also be included below.

Herein, unless explicitly stated, performs one step "in response to A" does not imply that this step is performed immediately after "A", but may include one or more intermediate steps.

**It** can be understood that data involved in the present technical solution (including but is not limited to the data itself, acquisition or use of the data) should follow the requirements of the corresponding laws and regulations and related stipulations.

**It** can be understood that, before a technical solution disclosed in respective embodiments of the present disclosure is used, all of the types, the use scope, the use scenario and the like of personal information related to the present disclosure should be notified to the user in an appropriate manner and an authorization of the user should be acquired according to the relevant laws and regulations.

For example, in response to receiving an active request from a user, prompt information is sent to the user to explicitly prompt the user that the requested operation will need to acquire and use personal information of the user. Therefore, the user can autonomously select whether to provide personal information to software or hardware, such as electronic device, application program, server, storage medium, etc. executing an operation of a technical solution of the present disclosure according to the prompt information.

As an optional but non-limiting embodiment, in response to receiving an active request of the user, the prompt information may be sent to the user, for example, using a pop-up window, and the prompt information may be presented in text manner in the pop-up window. In addition, the pop-up window may further carry a select control for the user to select "agree" or "disagree" to provide personal information to the electronic device.

**It** may be understood that the foregoing processes for notifying a user and acquiring an authorization of the user are merely illustrative, and do not constitute a limitation on embodiments of the present disclosure, and other manners meeting related laws and regulations may also be applied to embodiments of the present disclosure.

As used herein, the term "model" may learn an association relationship between respective inputs and outputs from training data such that a corresponding output may be generated for a given input after training is finished. Generation of the model may be based on machine learning techniques. Deep learning is a machine learning algorithm that processes inputs and provides corresponding outputs by using a multi-layer processing unit. Neural network model is one example of a deep-learning-based model. As used herein, "model" may also be referred to as "machine learning model", "learning model", "machine learning network," or "learning network," which terms are used interchangeably herein.

"Neural network" is a deep-learning-based machine learning network. Neural network can process inputs and provide corresponding outputs, which typically include an input layer and an output layer and one or more hidden layers between the input layer and the output layer. Neural networks used in deep learning applications typically include many hidden layers, so as to increase the depth of the network. Each layer of the neural network is connected in sequence such that the output of a previous layer is provided as an input to its next layer, wherein the input layer receives an input of the neural network and an output of the output layer serves as a final output of the neural network. Each layer of the neural network includes one or more nodes (also referred to as processing node or neuron), and each node processes input from the previous layer.

At present, a user, which opens a web page (or file, etc.), may talk with a digital assistant, asking the digital assistant to provide a digest, may specify a language to be used, interpret a difficult term in the web page, and the like. In this way, however, the user needs to input an explicit prompt to specify the task of the digital assistant. Thus, user's operation is boring and complicated. Correspondingly, when viewing multiple web pages, the user needs to input repetitively and constantly.

**In** view of this, according to an embodiment of the present disclosure, a method for content management is provided. The method comprises the steps of: obtaining an interaction history of a user with a processing system, and determining an attribute feature of the user based on the interaction history. Then, if a processing request input by the user to the processing system is received, a processing result for the processing request is presented according to the attribute feature. Therefore, through the interaction history, the processing result corresponding to the processing request can be obtained and presented according to the attribute feature, so that the user can obtain information in a more efficient manner.

### Example Environment

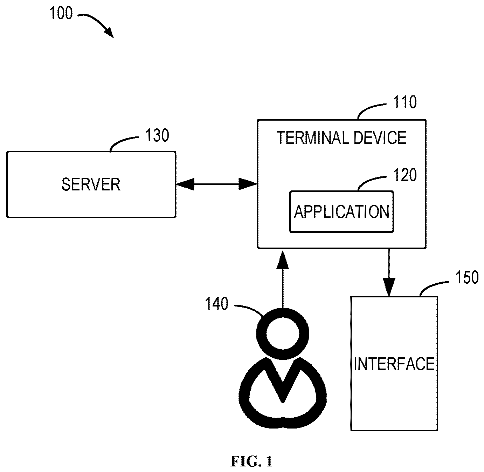

FIG. 1 illustrates a schematic diagram of an example environment 100 in which embodiments of the present disclosure can be implemented. In this example environment 100, an application 120 is installed in a terminal device 110. A user 140 may interact with the application 120 via the terminal device 110 and/or an attachment device of the terminal device 110.

**In** some embodiments, the application 120 may be any suitable application that may provide query services. In the environment 100 of FIG. 1, the terminal device 110 may present an interface 150 of application 120 if the application 120 is an active state. The interface 150 may include various interfaces that can be provided by the application 120, such as a query interface, a search interface, a search result presentation interface, and the like.

**In** some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a Personal Communication System (PCS) device, a personal navigation device, a personal digital assistant (PDA), an audio/video player, a digital camera/camcorder, a positioning device, a television receiver, a radio broadcast receiver, an electronic book device, a game device, or any combination of the foregoing, including accessories and peripherals of these devices, or any combination thereof. In some embodiments, the terminal device 110 can also support any type of interface to a user (such as a "wearable" circuit or the like). The server 130 may be various types of computing systems/servers capable of providing computing capability, including, but not limited to, a mainframe, an edge computing node, a computing device in a cloud environment, and the like.

**It** should be understood that the structures and functions of various elements in the environment 100 are described for exemplary purposes only and do not imply any limitation to the scope of the present disclosure.

Some example embodiments of the present disclosure are described below with continued reference to accompanying drawings. It should be understood that interfaces shown in the drawings are merely examples, and various interface designs may actually exist. Individual graphical elements in interfacean interface may have different arrangements and different visual representations, one or more of which may be omitted or replaced, and one or more other elements may also exist. Embodiments of the present disclosure are not limited in this respect. In addition, in the following, example embodiments will be described primarily with respect to the terminal device 110. It should be understood that actions described with respect to the terminal device 110 may be performed by the application 120 on the terminal device 110, or may be performed by the application 120 in cooperation with its serving end (for example, the server 130).

**In** some embodiments, a method for content management is provided. In the method, an attribute feature of a user related to content understanding is obtained. The attribute feature herein may, for example, represent multiple aspects of user's understanding, such as, the language type used, and the like. In response to determining a first content to be presented, the first content is processed based on the attribute feature to obtain a second content, and the second content is presented. In this way, a content desired by a user can be presented according to the attribute feature and according to the user's understanding, so that the user obtains information in a more efficient manner.

In some embodiments, the method described above may be implemented in a variety of processing systems. For example, the method described above may be implemented in a browser, a search engine, a social network, and editors of various media, among others. For example, a user may submit a processing request in a processing system and determine the first content based on receiving a response to the processing request from the processing system. If the first content does not match an attribute feature of a user related to content understanding, the first content may be converted into a second content that matches the user's attribute feature related to content understanding, and the second content is presented.

In some embodiments, the attribute features include a plurality of attribute features, which include at least one of the following: a language type that the user desires to use, an understanding degree of the user for the domain to which the first content belongs, a focus of the user on the first content, and a presentation format that the user desires to use.

Specifically, a user may grasp a plurality of language types (for example, Chinese, English, etc.), and a language type that the user is most specialized at may be determined. If the language type of the first content is different from the language type expected by the user, the first content may be converted into a second content expressed in a language desired by the user, and the second content may be presented. The user's understanding degree for knowledge in different domains may be different. Assuming that the user is a programmer and is specialized at various programming languages, in which case, it may be determined that the understanding degree for the programming domain is high, and a technical document may be presented in a professional manner. In addition, assuming that the user has a relatively low understanding degree for the music domain, in which case, a document that introduces music knowledge may be presented in a more popular manner.

Further, the user's focus on the first content may be different. For example, some users may focus on a summary of the first content, some users may focus on details, and some users may focus on hotspots or related extension information, among others. In this case, a second content including the focus may be determined according to the user's focus. For example, the second content may be presented in a highlighted manner in the first content. Alternatively and/or additionally, the second content may be presented in a separate display area. In addition, the presentation format that the user desires to use may be different, some users desire to browse a text content and some users wish to watch a video content. The first content may be converted to the second content and presented to the user in a format desired by the user.

**In** some embodiments, processing the first content based on the attribute features to obtain the second content includes: determining a set of target attribute features from a plurality of attribute features; and converting the first content to the second content based on the set of target attribute features. Specifically, one or more target attribute features required by the user may be selected from the plurality of attribute features described above. Assuming that a user's idiomatic language is Chinese, and the user has a relatively low understanding of the music, in which case, a document introducing music knowledge may be presented in a more popular manner and in Chinese. As another example, assuming that a user's idiomatic language is English, and the user wishes to listen to an audio about a summary content of news, in which case, the summary of the news represented in a Chinese text may be extracted, and the summary may be translated into English and a corresponding English audio may be generated. In this way, multiple aspects of a user's requirements can be met, thereby the second content is presented in a manner facilitating the user to understand.

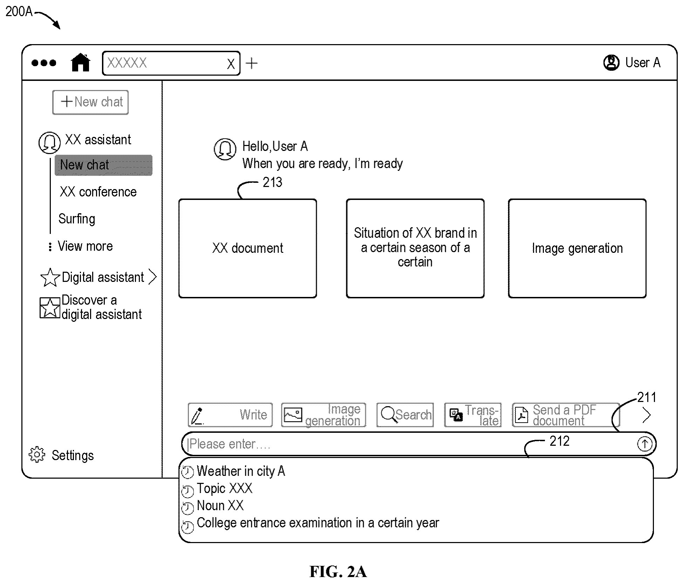

Solutions for content management of the present disclosure will be described below with reference to FIGS. 2A-2I. FIGS. 2A-2I illustrate schematic diagrams of example interfaces 200A- 200I for content management in accordance with some embodiments of the present disclosure.

**In** some embodiments, obtaining an attribute feature of a user related to content understanding may include: obtaining an interaction history between the user and a processing system; and based on the interaction history, obtaining the user's attribute feature related to content understanding. Specifically, the terminal device 110 obtains an interaction history between the user and the processing system. In some embodiments, the interaction history includes a historical processing request submitted by the user. As shown in the example interface 200A illustrated in FIG. 2A, the terminal device 110 obtains an interaction history 212 between the user 140 and the processing system based on the historical processing request input by the user 140 in an input box 211, such as a historical prompt input by the user (e.g., "weather in city A").

**In** some examples, the terminal device 110 may further obtain an interaction history between the user 140 and the processing system based on a historical processing request input by the user 140 in a search box included in a search interface. In some examples, the processing system includes a processing system implemented based on a search engine and/or a processing system implemented based on a machine learning model.

**In** some embodiments, the interaction history may further include the user's access history of a historical processing result for the historical processing request. In some examples, after the user submits a historical processing request, the terminal device 110 may present a plurality of processing results for the historical processing request according to the historical processing request submitted by the user. Then, the terminal device 110 collects at least one processing result viewed by the user 140, and the user 140 views a duration of each processing result. The terminal device 110 determines an interaction history based on the results collected by the terminal device 110. At this time, it can be determined that the user is more concerned with a processing result that has been viewed and more concerned with a processing result with longer query time, and the attribute feature can be determined based on such results.

**In** some embodiments, after obtaining the interaction history between the user and the processing system, the terminal device 110 determines the attribute feature of the user according to the interaction history. Then, if receiving a processing request input by the user to the processing system, the terminal device 110 presents a processing result for the processing request according to the attribute feature.

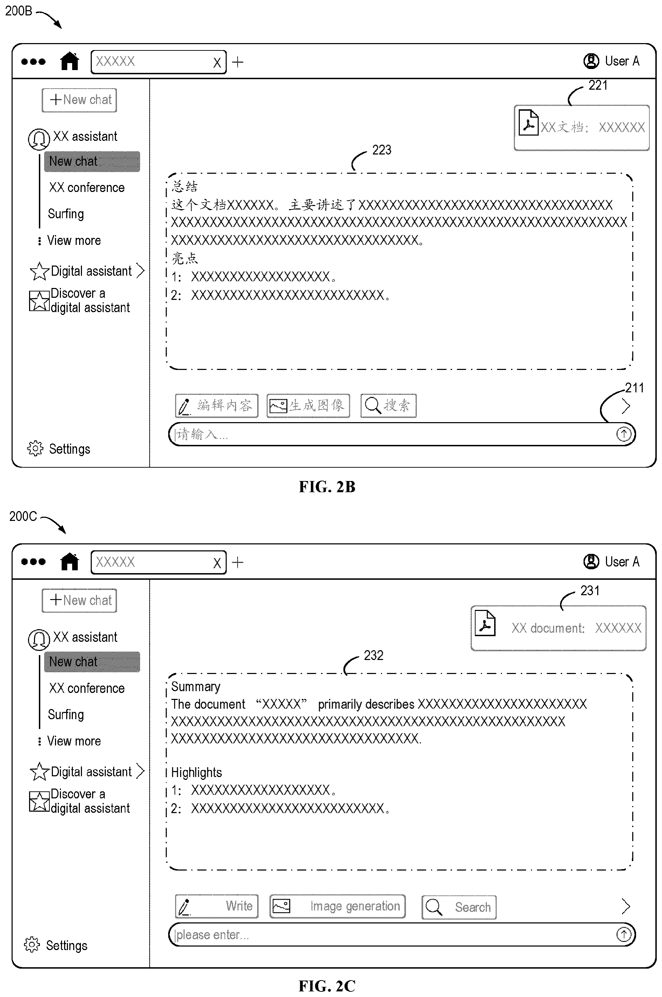

**In** some examples, the terminal device 110 determines the attribute feature of the user 140 according to the interaction history. For example, language, semantics that the user 140 often uses and visual information that the user 140 is accustomed to. Then, if receiving a processing request input by the user 140 at the processing system, the terminal device 110 presents a processing result for the processing request according to the attribute feature of the user 140. The terminal device presenting a processing result for the processing request input by a user according to the attribute feature it determines will be described in detail below with reference to FIGS. 2B to 2I.

In some embodiments, a processing request submitted by the user may include a request to search for a media item, such as query information that the user 140 inputs in the input box 211 included in a web page as shown in FIG. 2A. In some embodiments, the processing request submitted by the user may also include a request to process a remote media item. For example, the user 140 uses some link or some file in a web page as the query information. For example, the processing request may specify to translate some linked web page into English, or to summarize a digest of some file, and so on.

**In** some embodiments, the processing request submitted by the user may further include a request to process a local media item. For example, the user 140 takes a media item (e.g., link, text, picture, video, etc.) in his/her corresponding terminal device as the query information. In some embodiments, the processing request submitted by the user may further include a request to process a media item. For example, the user 140 takes a media item (e.g., text, picture, video, audio, etc.) as the query information. For example, the processing request may specify to rewrite a language style of some text or to process some picture, and so on.

Thus, by determining the attribute features of a user, it can be supported that the processing result is provided to a user in a manner desired by the user. For example, different users can see different results when accessing the same website, and the results seen are presented based on users' requirements. As another example, in a search process, a search result matching an idiomatic language, understanding degree and the like of the user may be presented. The terminal device presenting a processing result for the processing request input by a user according to the attribute feature it determines will be described below with continued reference to FIG. 2B to FIG. 2I.

In some embodiments, the terminal device 110 determines a language for presenting a processing result based on the language used in the interaction history. In some examples, the terminal device 110 may determine the common language of the user 140 according to the language used by the user 140 in the interaction history, and then present the processing result in the common language of the user 140 when presenting the processing result.

As shown in the example interface 200B illustrated in FIG. 2B, if the user 140 frequently uses Chinese in historical interactions with the processing system, the terminal device 110 may determine that the idiomatic language of the user 140 is Chinese according thereto. Subsequently, if the terminal device 110 receives a processing request 221 input by the user 140, the terminal device 110 presents the language of the processing result 223 as Chinese according to the idiomatic language of the user 140.

As shown in the example interface 200C illustrated in FIG. 2C, if the user 140 frequently uses English in historical interactions with the processing system, the terminal device 110 may determine that the idiomatic language of the user 140 is English according thereto. Subsequently, if the terminal device 110 receives a processing request 231 input by the user 140, the terminal device 110 presents the language of a processing result 232 as English according to the idiomatic language of the user 140.

Alternatively and/or additionally, the idiomatic language of the user may also be determined based on a commonly-used language of a user and the type of content involved in the user's query. Assuming that a user often uses Chinese to query news resources and often uses English to query academic resources, data such as news may be presented in Chinese and academic papers may be presented in English, and so on.

**In** some embodiments, the terminal device 110 may further determine an understanding degree of a user for a content in a target domain based on an interaction history. Then, based on the understanding degree, the terminal device 110 determines a description style used to present a processing result in the target domain. In some examples, according to an interaction history, the terminal device 110 may determine the understanding degree of the user 140 for the content in the target domain, determine a cognition degree of the user 140 for the target domain, and further determine to present a processing result in a target style.

For example, if the terminal device 110 determines that a user 140 has a low understanding degree for a certain domain according an interaction history, the terminal device 110 may present a processing result in a more popular style. If the terminal device 110 determines that the understanding degree of the user 140 for a certain domain is medium according to the interaction history, the terminal device 110 may present the processing result in a semi-professional style. If the terminal device 110 determines that the user 140 has a high understanding degree for a certain domain according to the interaction history, the terminal device 110 may present the processing result in a professional style.

In some embodiments, the terminal device 110 may determine a format for presenting a processing result according to an interaction history. In some examples, the terminal device 110 may determine a format commonly used by a user 140 according to an interaction history. Therefore, the terminal device 110 presents a processing result in a format commonly used by the user 140. In some embodiments, the presentation format of a processing result may be a plain text format, a graphic-and-text format, an audio format, a video format, etc., which is not limited in the present disclosure. In some embodiments, the length of a processing result that is presented may also be different. For example, if a user 140 prefers to view a historical processing result in the graphic-and-text format when viewing historical processing results, the terminal device 110 may use the graphic-and-text format as a common format of the user, so that the terminal device 110 presents a processing result in the graphic-and-text format.

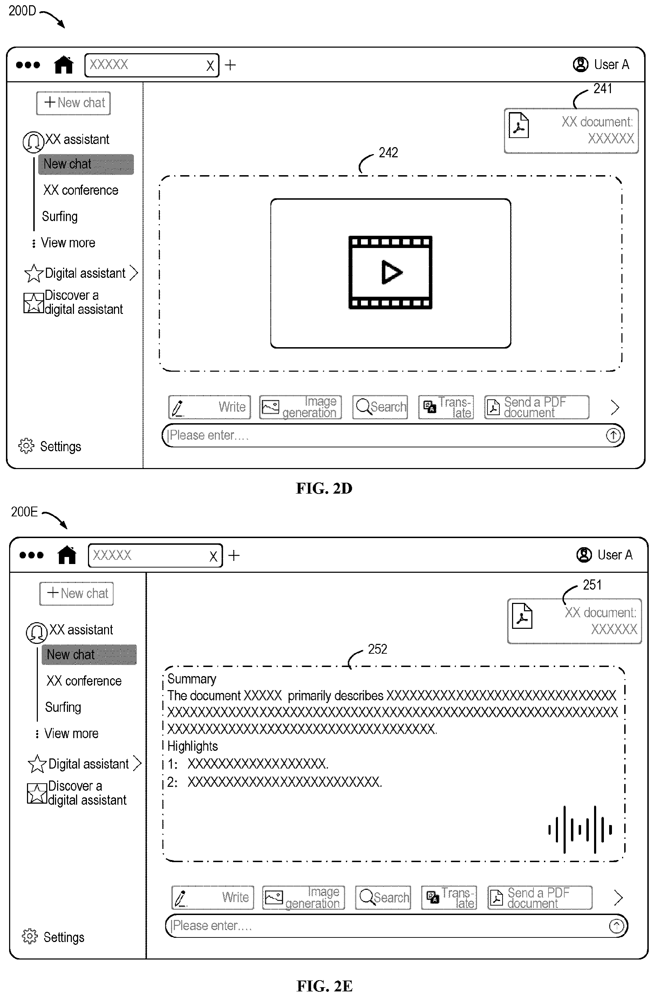

As shown in the example interface 200D illustrated in FIG. 2D, assuming that the terminal device 110 determines that the format preferred by a user is a video format according to an interaction history. Subsequently, if the terminal device 110 receives a processing request 241 input by the user 140, the terminal device 110 presents a processing result 242 according to the video format preferred by the user 140.

**As** shown in the example interface 200E illustrated in FIG. 2E, assuming that the terminal device 110 determines that the format preferred by a user is an audio format according to an interaction history. Subsequently, if the terminal device 110 receives a processing request 251 input by the user 140, the terminal device 110 presents a processing result 252 according to the audio format preferred by the user 140.

**In** some embodiments, the processing system further includes a plurality of digital assistants, and the attribute features include a plurality of attribute features for the plurality of digital assistants, respectively. In some embodiments, a first attribute feature of a first digital assistant of the plurality of digital assistants is different from a second attribute feature of a second digital assistant of the plurality of digital assistants.

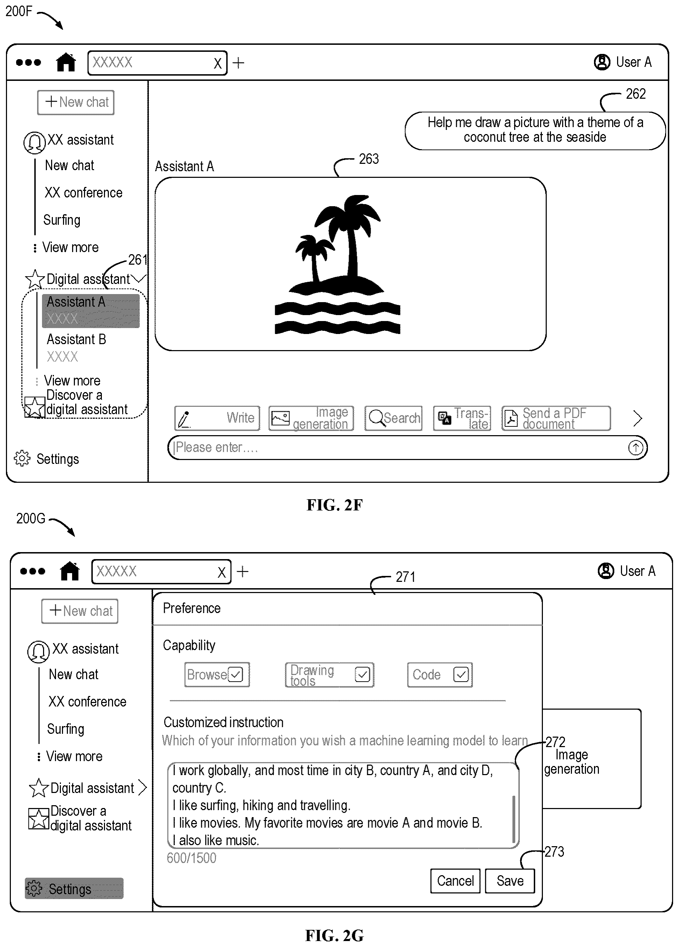

**As** shown in the example interface 200F illustrated in FIG. 2F, the processing system includes a plurality of digital assistants 261, and each of the plurality of digital assistants 261 has a different function. It will be appreciated that the plurality of digital assistants 216 may each accomplish different requirements of the user 140.

In some embodiments, the terminal device 110 selects a first digital assistant from a plurality of digital assistants based on a processing request. Then, the terminal device 110 presents a processing result for the processing request in accordance with a first attribute feature of the first digital assistant. In some examples, after receiving a processing request from the user 140, the terminal device 110 selects a first digital assistant matching the processing request from the plurality of digital assistants 261 according to the function of each of the plurality of digital assistants 261.

As shown in the example interface 200F illustrated in FIG. 2F, after the terminal device 110 receives a processing request 262 from a user 140 (for example, "help me draw a picture with a theme of a coconut tree at the seaside"), the terminal device 110 determines assistant A matching the processing request 262. Subsequently, the terminal device 110 presents a processing result 263 for the processing request 262 according to an attribute feature of assistant A. It will be appreciated that a corresponding function of assistant A is drawing, and therefore, the terminal device 110 may invoke assistant A to determine the processing result 263 corresponding to the processing request 262.

In some embodiments, after the terminal device 110 determines an attribute feature of a user 140 according to an interaction history, the user 140 is further supported in editing the attribute feature. The following embodiments will describe the user 140 editing an attribute feature.

**In** some embodiments, if the terminal device 110 receives an update request, an attribute feature will be updated based on the update request. As shown in the example interface 200G illustrated in FIG. 2G, if the terminal device 110 detects that a user 140 triggers a "settings" control, a "settings" interface 271 will be presented. The "settings" interface 271 includes the terminal device 110 determining an attribute feature of the user 140 according to an interaction history, for example, "I work globally, and most time in city B, country A etc.".

The terminal device 110 may receive an update request from the user 140 based on the "settings" interface 271. In some examples, user 140 may edit an instruction 272 corresponding to information. Then, if the terminal device 110 detects that the user 140 clicks a "save" control 273, the attribute feature is updated according to the edit of the instruction 272 corresponding to the information by the user 140. In some examples, the user 140 may modify the instruction 272 corresponding to the information, may add the instruction 272 corresponding to the information, may delete the instruction 272 corresponding to the information, or the like.

In some embodiments, if the terminal device 110 determines that an attribute feature is activated, a processing result will be presented according to the attribute feature. In some examples, the terminal device 110 supports user 140 in setting to use or not to use an attribute feature. It will be appreciated that, for the same website, if an attribute feature is set to be used, different users will be able to see different contents for similar processing requests. For the same website, if an attribute feature is set not to be used, different users will be able to see the same content for similar processing requests.

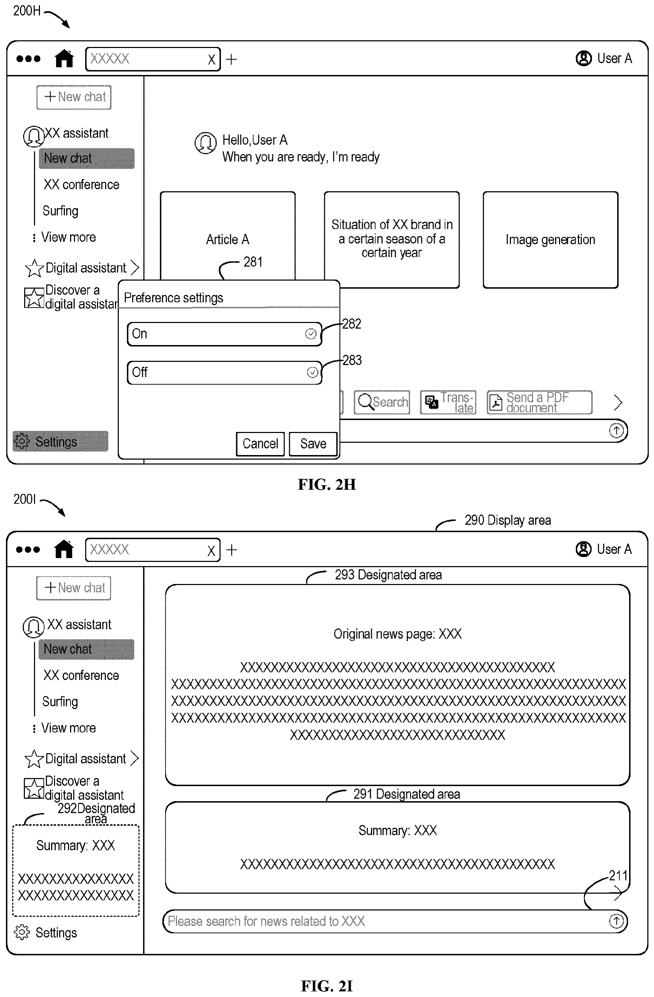

**As** shown in the example interface 200H illustrated in FIG. 2H, if the terminal device 110 detects that a user 140 triggers the "settings" control, a "settings" interface 281 may be presented. The user 140 may set whether to use an attribute feature based on the "settings" interface 281. For example, the user 140 may select an "on" control 282, and may enable a processing system to provide a processing result according to the attribute feature of the user 140 when using the processing system for query. The user 140 may select an "off" control 283 and may enable the processing system to provide a processing result in a normal manner when using the processing system for query.

In some embodiments, the method is performed in a processing system, and presenting the second content includes presenting the second content in a designated area of the processing system, the designated area including at least a portion of a display area of the processing system, or a floating layer area superimposed over the display area of the processing system. Further details are described with reference to FIG. 2I, which illustrates a schematic diagram 200I of an example interface for content management in accordance with some embodiments of the present disclosure.

As shown in FIG. 2I, a user inputs "Please search for news related to XXX" in the input box 211, and may obtain a corresponding search result (that is, a first content), and convert the first content to a second content according to an attribute feature (for example, a wish to know the summary) of the user. A designated area may be provided in the display area 290 of a processing system. For example, the converted second content may be presented in the designated area 291 which may be superimposed over the display area 290 in a floating layer, and the user may move the location of the designated area 291. Alternatively and/or additionally, a designated area 292 may be defined in the left interactive area of the display area 290, may be fixed in the interactive area and will not obscure other content in the display area. In this way, it may be supported the user can set a presentation location of the second content in accordance with the requirement thereof, thereby improving the efficiency of obtaining information by the user.

**In** some embodiments, the method may further include presenting the first content in another designated area outside the designated area of the processing system. As shown in FIG. 2I, the first content may be presented in a designated area 293 in the display area 290. In this way, the first content before conversion and the converted second content can be presented at the same time, so as to facilitate the user to compare them and in turn obtain information in a more efficient manner. It should be understood that although FIG. 2I presents the first content and the second content respectively in two areas divided in the vertical direction, alternatively and/or additionally, the two areas may be determined in the horizontal direction, and the first content and the second content may be presented in the two areas, respectively.

**In** summary, by determining an attribute feature of a user, the present disclosure can provide the user with a processing result presented according to the attribute feature of the user. Further, a media content is processed by being customized for adaptation to a corresponding user, so that the user obtains information in a more efficient manner.

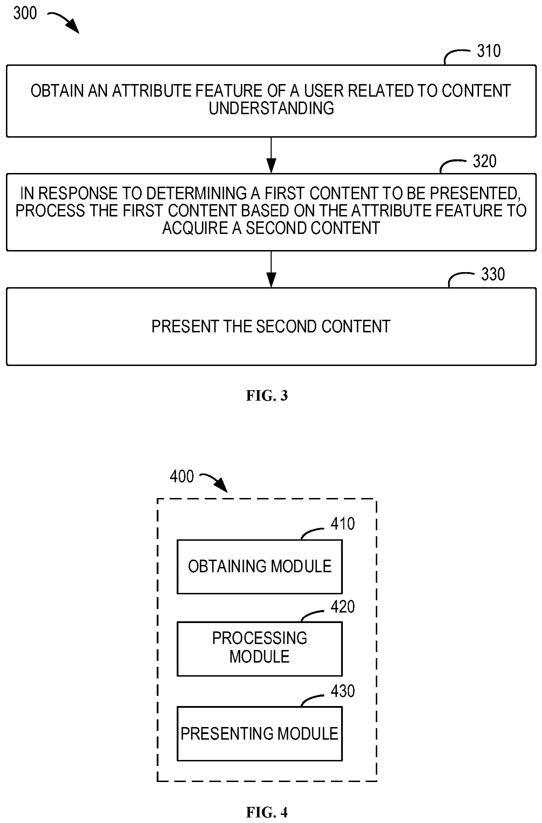

FIG. 3 shows a flowchart of a process for content management according to some embodiments of the present disclosure. Process 300 may be implemented at the terminal device 110. The process 300 will be described below with reference to FIG. 1. In block 310, an attribute feature of a user related to content understanding is obtained. In block 320, in response to determining a first content to be presented, the first content is processed based on the attribute feature to obtain a second content. In block 330, the second content is presented.

According to some implementations of the present disclosure, the attribute features include a plurality of attribute features, and the plurality of attribute features include at least one of the following: a language type that the user desires to use, an understanding degree of the user for a domain to which the first content belongs, a focus of the user on the first content, and a presentation format that the user desires to use.

According to some implementations of the present disclosure, processing the first content based on the attribute feature to obtain a second content includes: determining a set of target attribute features from a plurality of attribute features; and converting the first content to the second content based on the set of target attribute features.

According to some implementations of the present disclosure, the method is performed in a processing system, and presenting the second content includes presenting the second content in a designated area of the processing system, the designated area including at least a portion of a display area in the processing system, or a floating layer area superimposed over the display area in the processing system.

According to some implementations of the present disclosure, the method further includes: presenting the first content in another designated area outside the designated area in the processing system.

According to some implementations of the present disclosure, obtaining an attribute feature of the user related to content understanding includes: obtaining an interaction history between the user and a processing system; and obtaining the attribute feature related to the content understanding of the user based on the interaction history.

According to some implementations of the present disclosure, the interaction history includes at least one of the following: a historical processing request submitted by the user, and the user's access history of a historical processing result for the historical processing request.

According to some implementations of the present disclosure, determining the attribute feature based on the interaction history includes: determining a language type that the user desires to use based on a language used in the interaction history.

According to some implementations of the present disclosure, determining the attribute feature based on the interaction history includes: based on the interaction history, determining an understanding degree of the user for the domain to which the first content belongs, a focus of the user on the first content, and a presentation format that the user desires to use.

According to some implementations of the present disclosure, the method is performed in a processing system, and the processing system includes a plurality of digital assistants, the attribute features including a plurality of attribute features for the plurality of digital assistants, respectively, and the method further includes: in response to receiving a processing request to obtain the first content, selecting a first digital assistant from the plurality of digital assistants; and obtaining the first content according to a first attribute feature of the first digital assistant.

According to some implementations of the present disclosure, the first attribute feature of the first digital assistant is different from a second attribute feature of a second digital assistant of the plurality of digital assistants.

According to some implementations of the present disclosure, the method further includes: in response to receiving an update request, updating the attribute feature based on the update request.

According to some implementations of the present disclosure, presenting the second content includes: in response to determining that the attribute feature is activated, presenting the second content.

According to some implementations of the present disclosure, the processing request includes at least one of the following: a request to search for a media item; a request to process a remote media item; a request to process a local media item; and a request to generate a media item.

Embodiments of the present disclosure also provide a corresponding apparatus for implementing the above method or process. FIG. 4 illustrates a schematic structural block diagram of an apparatus 400 for content management according to some embodiments of the present disclosure. The apparatus 400 may be implemented or included in the terminal device 110. The various modules/components in the apparatus 400 may be implemented by hardware, software, firmware, or any combination thereof.

As shown in FIG. 4, the apparatus 400 includes: an obtaining module 410 configured to obtain an attribute feature of a user related to content understanding; a processing module 420 configured to, in response to determining a first content to be presented, process the first content based on the attribute feature to acquire a second content; and a presenting module 430 configured to present the second content.

According to some implementations of the present disclosure, the attribute features include a plurality of attribute features, and the plurality of attribute features include at least one of the following: a language type that the user desires to use, an understanding degree of the user for a domain to which the first content belongs, a focus of the user on the first content, and a presentation format that the user desires to use.

According to some implementations of the present disclosure, the processing module is further configured to: determine a set of target attribute features from the plurality of attribute features; and convert the first content to the second content based on the set of target attribute features.

According to some implementations of the present disclosure, the apparatus is implemented in a processing system, and the presentation module is further configured to: present the second content in a designated area in the processing system, the designated area including at least a portion of a display area in the processing system, or a floating layer area superimposed over the display area in the processing system.

According to some implementations of the present disclosure, the presentation module is further configured to present the first content in another designated area outside the designated area in the processing system.

According to some implementations of the present disclosure, the obtaining module is further configured to: obtain an interaction history between the user and a processing system; and obtain the attribute feature of the user related to content understanding based on the interaction history.

According to some implementations of the present disclosure, the interaction history includes at least one of the following: a historical processing request submitted by the user, and the user's access history of a historical processing result for the historical processing request.

According to some implementations of the present disclosure, the obtaining module is further configured to determine a language type that the user desires to use based on a language used in the interaction history.

According to some implementations of the present disclosure, the obtaining module is further configured to: based on the interaction history, determine an understanding degree of the user for the domain to which the first content belongs, a focus of the user on the first content, and a presentation format that the user desires to use.

According to some implementations of the present disclosure, the apparatus is implemented in a processing system, the processing system includes a plurality of digital assistants, the attribute features include a plurality of attribute features for the plurality of digital assistants, respectively, and the apparatus is further configured to: in response to receiving a processing request to obtain the first content, select a first digital assistant from the plurality of digital assistants; and obtain the first content according to a first attribute feature of the first digital assistant.

According to some implementations of the present disclosure, the first attribute feature of the first digital assistant is different from a second attribute feature of a second digital assistant of the plurality of digital assistants.

According to some implementations of the present disclosure, the apparatus is further configured to: in response to receiving an update request, update the attribute feature based on the update request.

According to some implementations of the present disclosure, the presenting module is further configured to present the second content in response to determining that the attribute feature is activated.

According to some implementations of the present disclosure, the processing request includes at least one of the following: a request to search for a media item; a request to process a remote media item; a request to process a local media item; and a request to generate a media item.

The units and/or modules included in the apparatus 400 may be implemented in various manners, including software, hardware, firmware, or any combination thereof. In some embodiments, one or more units and/or modules may be implemented in software and/or firmware, such as machine-executable instructions stored on a storage medium. In addition to or as an alternative to machine-executable instructions, some or all of the units and/or modules in the apparatus 400 may be implemented, at least in part, by one or more hardware logic components. By way of example and not limitation, exemplary types of hardware logic components that may be used include field programmable gate arrays (FPGA), application specific integrated circuits (ASIC), application specific standard products (ASSP), system-on-a-chip (SOC), complex programmable logic devices (CPLD), and the like.

It should be understood that one or more steps of the above method may be performed by a suitable electronic device or a combination of electronic devices. Such an electronic device or a combination of electronic devices may include, for example, the terminal device 110 in FIG. 1.

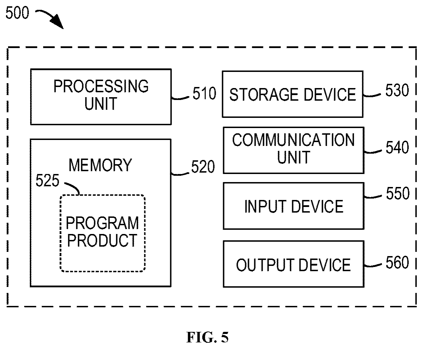

FIG. 5 illustrates a block diagram of an electronic device 500 in which one or more embodiments of the present disclosure may be implemented. It should be understood that the electronic device 500 illustrated in FIG. 5 is merely exemplary and should not constitute any limitation on the function and scope of the embodiments described herein. The electronic device 500 illustrated in FIG. 5 may be configured to implement the terminal device 110 in FIG. 1.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In a multi-processor system, multiple processing units execute computer-executable instructions in parallel to improve parallel processing capability of electronic device 500.

**The** electronic device 500 typically includes a plurality of computer storage mediums. Such mediums may be any available medium accessible to the electronic device 500, including, but is not limited to, volatile and non-volatile medium, removable and non-removable medium. The memory 520 may be a volatile memory (e.g., register, cache, random access memory (RAM)), a non-volatile memory (e.g., read-only memory (ROM), electrically erasable programmable read-only memory (EEPROM), flash memory), or some combination thereof. The storage device 530 may be a removable or non-removable medium and may include a machine-readable medium, such as flash drive, magnetic disk, or any other medium which may be capable of storing information and/or data and may be accessed within the electronic device 500.

**The** electronic device 500 may further include additional removable/non-removable, volatile/non-volatile storage medium. Although not shown in FIG. 5, a disk drive for reading from or writing to a removable, non-volatile magnetic disk (e.g., a "soft disk") and an optical disk drive for reading from or writing to a removable, non-volatile optical disk may be provided. In these cases, each drive may be connected to a bus (not shown) by one or more data medium interfaces. The memory 520 may include a computer program product 525 having one or more program modules configured to perform various methods or actions of various embodiments of the present disclosure.

**The** communication unit 540 implements communication with another electronic device through a communication medium. Additionally, the functions of components of the electronic device 500 may be implemented in a single computing cluster or multiple computing machines capable of communicating over a communication connection. Thus, the electronic device 500 may operate in a networked environment using logical connections with one or more other servers, network personal computers (PCs), or another network node.

**The** input device 550 may be one or more input devices such as mouse, keyboard, trackball, or the like. The output device 560 may be one or more output devices, such as display, speaker, printer, or the like. The electronic device 500 may also communicate with one or more external devices (not shown) such as storage device, display device, etc. through the communication unit 540 as needed, communicate with one or more devices that enable a user to interact with the electronic device 500, or communicate with any device (e.g., a network card, a modem, etc.) that enables the electronic device 500 to communicate with one or more other electronic devices. Such communication may be performed via an input/output (I/O) interface (not shown).

According to exemplary implementations of the present disclosure, there is provided a computer-readable storage medium having computer-executable instructions stored thereon, wherein the computer-executable instructions are executed by a processor to implement the method described above. According to exemplary implementations of the present disclosure, a computer program product is further provided, the computer program product being tangibly stored on a non-transitory computer-readable medium and including computer-executable instructions, the computer-executable instructions being executed by a processor to implement the method described above.

Various aspects of the present disclosure are described herein with reference to flowchart(s) and/or block diagram(s) of methods, apparatuses, devices, and computer program products implemented in accordance with the present disclosure. It should be understood that each of the block(s) of the flowchart(s) and/or block diagram(s) and combination(s) of respective blocks in the flowchart(s) and/or block diagram(s) may be implemented by computer-readable program instructions.

These computer-readable program instructions may be provided to a processing unit of a general purpose computer, a special purpose computer, or another programmable data processing apparatus to produce a machine, such that the instructions, when executed by a processing unit of a computer or another programmable data processing apparatus, produce means to implement the functions/actions specified in one or more blocks of the flowchart(s) and/or block diagram(s). These computer-readable program instructions, which cause the computer, the programmable data processing apparatus and/or the other device to operate in a particular manner, may also be stored in a computer-readable storage medium, such that the computer-readable medium storing instructions includes a manufactured article including instructions to implement various aspects of the functions/actions specified in one or more blocks of the flowchart(s) and/or block diagram(s).

The computer-readable program instructions may be loaded onto a computer, another programmable data processing apparatus, or another device, such that a series of operational steps are performed on the computer, the other programmable data processing apparatus, or the other device to produce a computer-implemented process, thereby enabling the instructions executed on the computer, the other programmable data processing apparatus, or the other device to implement the functions/actions specified in one or more blocks of the flowchart(s) and/or block diagram(s).

**The** flowchart(s) and block diagram(s) in the drawings show architecture(s), function(s), and operation(s) possibly implemented by system(s), method(s), and computer program product(s) according to multiple implementations of the present disclosure. In this regard, each block in the flowchart(s) or block diagram(s) may represent a module, a program segment, or a portion of instructions that includes one or more executable instructions for implementing specified logic function. In some alternative implementations, the functions noted in the blocks may also occur in a different order from that noted in the drawings. For example, two consecutive blocks may actually be performed substantially in parallel, or may sometimes be performed in a reverse order, depending on the functions involved. It is also noted that each block in the block diagram(s) and/or flowchart(s) as well as combination(s) of blocks in the block diagram(s) and/or flowchart(s) may be implemented with a dedicated hardware-based system that performs specified functions or actions, or may be implemented with a combination of dedicated hardware and computer instructions.

Various implementations of the present disclosure have been described above, which are exemplary and not exhaustive, and the implementations disclosed are not limiting. Many modifications and variations will be apparent to those ordinary skilled in the art without departing from the scope and spirit of the various implementations illustrated. The selection of the terms used herein is intended to best explain the principles, practical applications, or improvements to techniques in the marketplace of respective implementations, or to enable other ordinary skilled in the art to understand respective implementations disclosed herein.

## Claims

1. A method for content management, comprising:
obtaining attribute features of a user related to content understanding;
processing the first content based on the attribute features to obtain a second content in response to determining a first content to be presented; and
presenting the second content.

2. The method of claim 1, wherein the attribute features comprise a plurality of attribute features, and the plurality of attribute features comprise at least one of: a language type that the user desires to use, an understanding degree of the user for a domain to which the first content belongs, a focus of the user on the first content, and a presentation format that the user desires to use.

3. The method of claim 2, wherein processing the first content based on the attribute features to obtain the second content comprises:
determining a set of target attribute features from the plurality of attribute features; and
converting the first content to the second content based on the set of target attribute features.

4. The method of claim 1, wherein the method is performed in a processing system, and presenting the second content comprises: presenting the second content in a designated area in the processing system, the designated area comprising at least a portion of a display area in the processing system or a floating layer area superimposed over the display area in the processing system.

5. The method of claim 4, further comprising: presenting the first content in another designated area outside the designated area in the processing system.

6. The method of claim 1, wherein obtaining the attribute features of the user related to the content understanding comprises:
obtaining an interaction history between the user and a processing system; and
obtaining the attribute features of the user related to the content understanding based on the interaction history.

7. The method of claim 6, wherein the interaction history comprises at least one of: a historical processing request submitted by the user, and an access history of the user for a historical processing result of the historical processing request.

8. The method of claim 6, wherein determining the attribute features based on the interaction history comprises: determining a language type that the user desires to use based on a language used in the interaction history.

9. The method of claim 6, wherein determining the attribute features based on the interaction history comprises: determining, based on the interaction history, an understanding degree of the user for a domain to which the first content belongs, a focus of the user on the first content, and a presentation format that the user desires to use.

10. The method of claim 1, wherein the method is performed in a processing system, the processing system comprises a plurality of digital assistants, and the attribute features comprise a plurality of attribute features for the plurality of digital assistants, respectively, and the method further comprises:
selecting a first digital assistant from the plurality of digital assistants in response to receiving a processing request to obtain the first content; and
obtaining the first content according to a first attribute feature of the first digital assistant.

11. The method of claim 10, wherein the first attribute feature of the first digital assistant is different from a second attribute feature of a second digital assistant of the plurality of digital assistants.

12. The method of claim 1, further comprising: updating the attribute features based on the update request in response to receiving an update request.

13. The method of claim 1, wherein presenting the second content comprises presenting the second content in response to determining that the attribute features are activated.

14. The method of claim 10, wherein the processing request comprises at least one of:
a request to search for a media item;
a request to process a remote media item;
a request to process a local media item; and
a request to generate a media item.

15. An apparatus for content management, comprising:
an obtaining module configured to obtain attribute features of a user related to content understanding;
a processing module configured to process the first content based on the attribute features to obtain a second content in response to determining a first content to be presented; and
a presenting module configured to present the second content.

16. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1-14.

17. A computer-readable storage medium storing a computer program thereon, the computer program, when executed by a processor, causing the processor to implement the method of any of claims 1-14.

18. A computer program product comprising a computer program, wherein the computer program, when executed by a processor, implements the method of any of claims 1-14.
